# EUROPEAN PATENT APPLICATION

(11) **EP 2 393 287 A1**
(43) Date of publication of application: **07.12.2011**
(21) Application number: 10196995.4
(22) Date of filing: 24.12.2010
(51) Int. Cl.: H04N 5/445, H04N 5/76, G06F 12/14, G06F 12/16, G11B 27/00

(54) **Video recorder, video display device, and method of deleting recorded video content**

(30) Priority: 03.06.2010 JP 2010127755
(71) Applicant: Kabushiki Kaisha Toshiba, Minato-ku Tokyo 105-8001 (JP)
(72) Inventor: Shinokawa, Kazuhito, Tokyo (JP)
(74) Representative: Henkel, Breuer & Partner

(57) **Abstract**

In one embodiment, there is provided a video recorder. The recorder includes: a first-input screen output module configured to output a first input screen, wherein at least one user authorized to delete a recorded content is specified using the first input screen; a second-input screen output module to output a second input screen, wherein the user can determine whether to delete the recorded content using the second input screen; and a content deleting module configured to delete the recorded content when the user determines to delete the recorded content.

## Description

This application claims priority from Japanese Patent Application No. 2010-127755, filed on June 3, 2010, the entire contents of which are hereby incorporated by reference.

### BACKGROUND

### 1. Field

Embodiments described herein generally relate to a video recorder, a video display device and a method of deleting a recorded video content.

### 2. Description of the Related Art

A video recorder which receives a broadcast program (content) and the like, and which records it on a recording medium is in widespread use.
For example, a large capacity HDD (Hard Disk Drive) is used as a recording medium, and a TV program and the like are recorded thereon.
Although an HDD has a large capacity, there is a limit to the capacity of the HDD. In the case where the free space is reduced, the free space must be increased by deleting recorded programs. Furthermore, recorded programs are appropriately deleted by the user.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.
Fig. 1 is a block diagram showing a video recorder (video display device) of an embodiment;
Fig. 2 is a view showing an example of a library of recorded programs (a first selection screen for program deletion) which is displayed on a displaying device in the video recorder of the embodiment;
Fig. 3 is a view showing an example of a first input screen through which a user who is authorized to delete a program is specified by the user in the video recorder of the embodiment;
Fig. 4 is a view showing an example of a library of deletion-requested programs (second selection screen for program deletion) which is displayed on the displaying device in the video recorder of the embodiment;
Fig. 5 is a view showing an example of a display screen on which contents stored in a deleted-content folder (deletable) are displayed in the video recorder of the embodiment;
Fig. 6 is a view showing an example of a display screen on which, in the case where there is no deletable program, contents stored in the deleted-content folder (deletable) are displayed in the video recorder of the embodiment;
Fig. 7 is a conceptual diagram showing the flow of deleting a recorded program in the video recorder of the embodiment;
Fig. 8 is a view showing a screen on which a request confirmation for program deletion is displayed, and a second input screen in the video recorder of the embodiment; and
Fig. 9 is a flowchart to explain the operation of the video recorder of the embodiment.

### DETAILED DESCRIPTION

According to exemplary embodiments of the present invention, there is provided a video recorder. The video recorder includes: a first-input screen output module configured to output a first input screen, wherein at least one user authorized to delete a recorded content is specified using the first input screen; a second-input screen output module to output a second input screen, wherein the user can determine whether to delete the recorded content using the second input screen; and a content deleting module configured to delete the recorded content when the user determines to delete the recorded content.

Hereinafter, en embodiment of the invention will be described with reference to the drawings.

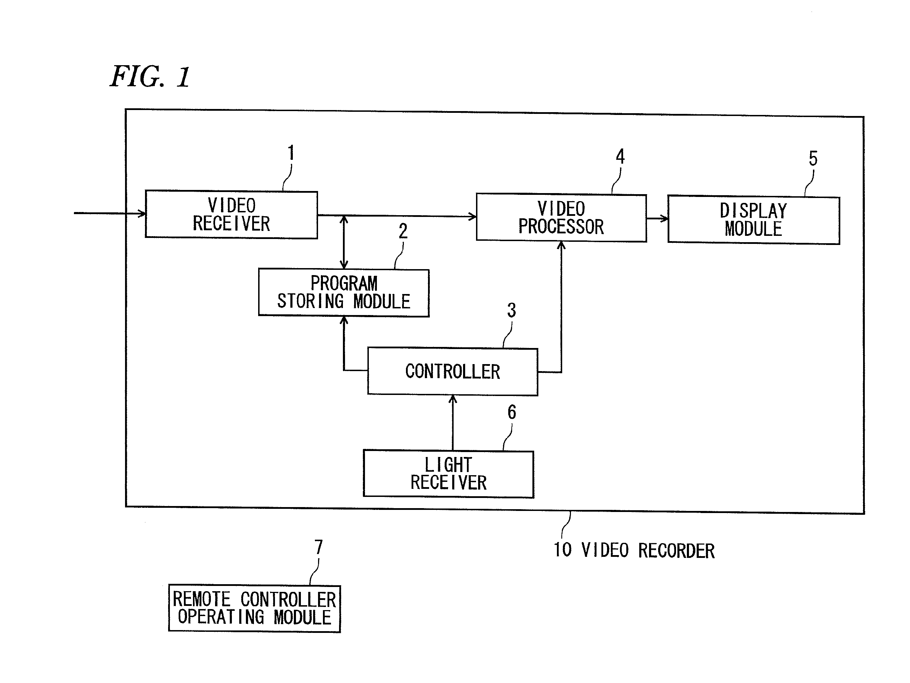

Fig. 1 is a block diagram showing a video recorder (video display device) of the embodiment.
The reference numeral 1 denotes a video receiver (broadcast receiver), 2 denotes a program (content) storing module, 3 denotes a controller, 4 denotes a video processor, 5 denotes a display module (video display module), 6 denotes a remote controller signal light receiver, 7 denotes a remote controller (remote controller), and 10 denotes the video recorder (video display device).

The video recorder (video display device) 10 incorporates the video receiver (broadcast receiver) 1, the program (content) storing module 2, the controller 3, the video processor 4, and the display module (video display module) 5.

A video signal which is transmitted from the outside via a television broadcast, the Internet, or the like is received by the video receiver 1 through an antenna.
The program (content) which is received by the video receiver 1 is transmitted to the video processor 4 or the program (content) storing module 2.
The program which is received by the program (content) storing module 2 is recorded in the program (content) storing module 2. When the program is to be reproduced, the content recorded in the program (content) storing module 2 is transmitted to the video processor 4.

The video processor 4 receives a video signal, performs a video process on the signal, and outputs the processed signal to the display module (video display module) 5. The display module (video display module) 5 displays the received video.
The user operates the remote controller (remote controller) 7, and operation information is output toward the light receiver 6. The light receiver 6 receives the operation information which is output from the remote controller (remote controller) 7, and outputs the information to the controller 3.

In the embodiment, the controller 3 is connected to the program storing module 2 and the video processor 4. Based on the operation information which is output from the remote controller (remote controller) 7, the controller 3 controls the program storing module 2 and the video processor 4.

Namely, video and audio signals demodulated by a tuner, or those of the video input are input to the video receiver 1.
The video signal which is output from the video receiver 1 is stored in the program storing module 2.
Based on information of the program stored in the program storing module 2, the controller 3 performs processes such as production a program library which is a program list described later, reproduction of the program, or deletion of the program.
The video processor 4 performs a process of producing a video signal for displaying or deleting a program library, and outputs the signal to the display module 5.
In the case of a stationary apparatus (a DVD or HDD recorder or the like), the display module 5 is a video signal outputting module, and, in the case of a television receiver, is a display screen.
The controller 3 is controlled by a signal from the light receiver 6 which receives the signal from the remote controller operating module 7.

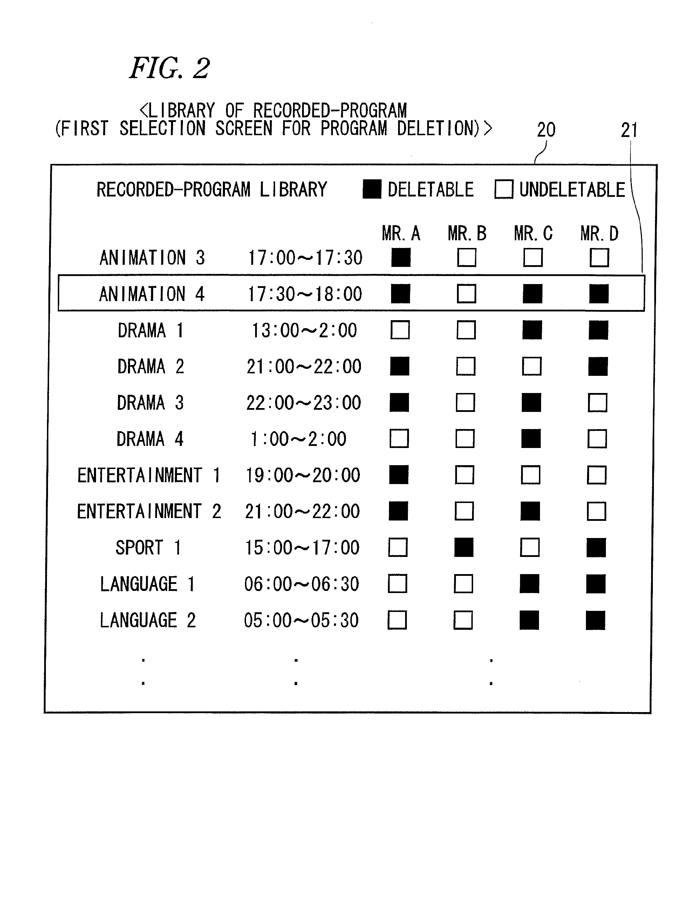

Fig. 2 is a view showing an example of a recorded-program library (first selection screen for program deletion) which is displayed on the displaying device in the video recorder of the embodiment.
Programs recorded in the video recorder 10 are displayed to the user as a recorded-program library in the form of a list.
The reference numeral 20 denotes a display screen of the recorded-program library. For example, the display screen is displayed on the display module 5.
In the recorded-program library 20, a plurality of programs in each of which other users are to determine whether deletion of the program is permitted or not are displayed as candidates in the form of a list.
On the screen, contents in which one(s) of the sharers of the video recorder 10 inputs an undeletable state (a white box is affixed) is displayed.
In the plurality of programs which are deletion candidates displayed in the form of a list, a predetermined program is selected by the user who operates the remote controller 7 or the like.
In the embodiment, the recorded-program library display screen 20 is referred to as a first selection screen for program deletion, and will be described in distinction from a second selection screen for program deletion which will be described later.
Here, in the recorded-program library (first selection screen for program deletion) 20, animation 4 in which deletion is not permitted by Mr. B (a white box: undeletable), and which is denoted by 21 is selected, and Mr. B is requested to permit deletion (hereinafter, the term "Mr." is used to refer "Mr. or Ms.") as described later.

At this time, a request for confirming whether deletion is permitted or not has not yet been issued to the user (the white box) from whom permission of deletion of the program is to be obtained.

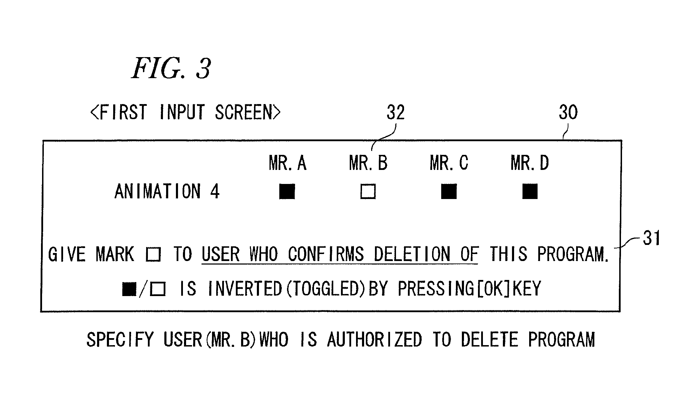

Fig. 3 is a view showing an example of a first input screen through which a user from whom permission of deletion of the program is to be obtained is specified by the user in the video recorder of the embodiment.
The reference numeral 30 denotes the first input screen through which a user from whom permission of deletion of the program is to be obtained is specified by the user.
For example, the first input screen is displayed on the display module 5, and a user from whom permission of deletion is to be obtained is input through the screen by the user.
As denoted by 32, the user (Mr. B) from whom permission of deletion of the program (animation 4) is to be obtained is specified.
As denoted by 31, the input is done by affixing a white box mark to the user (Mr. B) who performs confirmation of deletion of the program.
With respect to other programs in which deletion is to be permitted, similarly, a user from whom permission of deletion of the program is to be obtained is input through the first input screen.
In the embodiment, also in the case where a user other than another user who performed the operation of recording a subject program wishes that the program is not deleted, the deletion confirmation attribute can be registered for each program in a manner similar to the above.

For example, it is assumed that Mr. A wishes to delete program "animation 4". .
Mr. A tries to move the program to a deleted-content folder (deletable) 50. However, the deletion confirmation registration of Mr. B exists in the program "animation 4", and hence the program cannot be moved to the deleted-content folder (deletable) 50. The program "animation 4" is moved to a deletion candidate folder (undeletable) 51.

At the same time, in a box of Mr. A in the program "animation 4", a check mark indicating that the program is permitted to be deleted is placed, and a display using the deletion candidate folder (undeletable) 51 is displayed.
Programs in the deletion candidate folder (undeletable) 51 are in the undeletable state.
A process of adding information of the deletion confirmation attribute (a white box, a black box, a check mark, and the like) can be conducted not only in the display of a recorded-program library, but also in a program reservation.

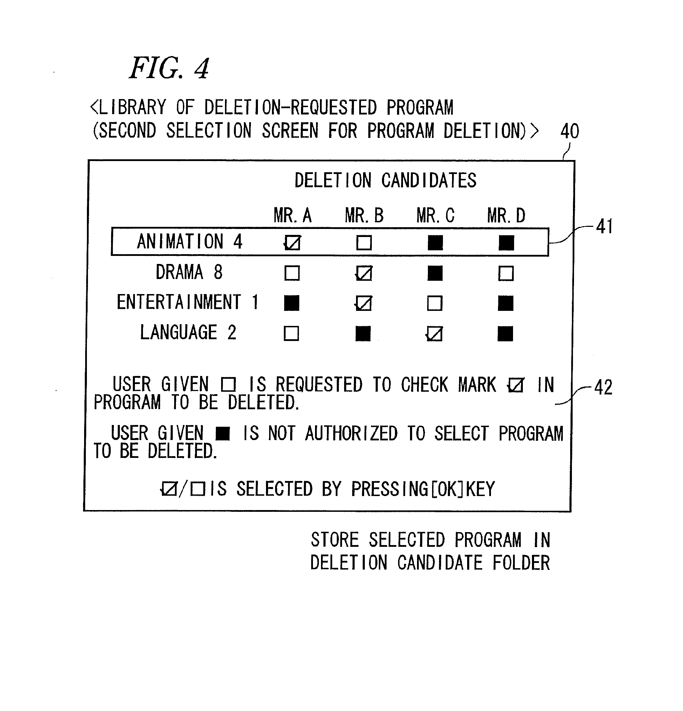

Fig. 4 is a view showing an example of a deletion request program library (second selection screen for program deletion) which is displayed on the displaying device in the video recorder of the embodiment.
As described above, a content in which a user (a white box) from whom permission of deletion is to be obtained is input by the user is displayed as the recorded program list as shown in, for example, the figure.
At this time, a request for confirming whether deletion is permitted or not has not yet been issued to the user (the white box) to whom the request for whether deletion is permitted or not is to be issued.
A content (recorded program) in which someone is to be requested to actually confirm whether deletion is permitted or not is selected and designated in the display screen 40.
Here, the program (animation 4) denoted by 41 is selected in the recorded program list.
As shown in the figure, as present, Mr. B sets animation 4 as undeletable (the white box). Therefore, a request for deletion is issued to Mr. B.
In conjunction with power-on of a TV set, for example, the request which is issued to Mr. B to confirm deletion of the program (animation 4) is displayed as described later.
When Mr. B (a user affixed by a white box) thinks that the program (animation 4) is deletable, Mr. B inputs permission (a check mark is placed in the white box). When Mr. B does not think that the program (animation 4) is deletable, Mr. B does not input permission (a check mark is not placed in the white box).

Then, the program (for example, animation 4) in which deletion is permitted (a check mark is placed) is moved to the deleted-content folder (deletable) 50 to be stored therein.

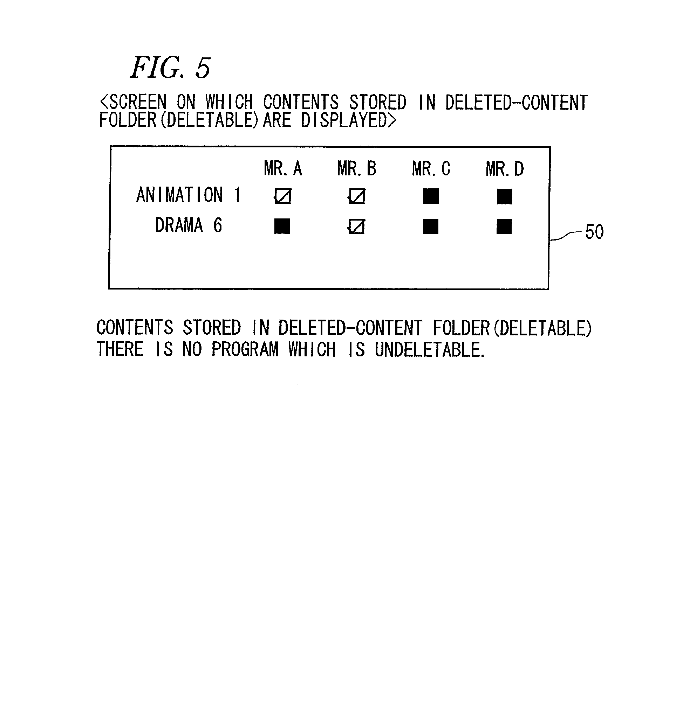

Fig. 5 is a view showing an example of a display screen on which contents stored in the deleted-content folder (deletable) 50 are displayed in the video recorder of the embodiment.
The example is the display screen of the contents stored in the deleted-content folder (deletable) 50.
In the example, it is shown that animation 1 and drama 6 are stored in the deleted-content folder (deletable) 50.
With respect to animation 1, it is shown that Messrs. A and B permit deletion (the check marks), and Messrs. C and D are non-voting (the black boxs). Namely, it is shown that all of the users (Messrs. A, B, C, and D) permit deletion.

With respect to drama 6, it is shown that Mr. B permits deletion (the check mark), and Messrs. A, C, and D are non-voting (the black boxs). Similarly, it is shown that all of the users (Messrs. A, B, C, and D) permit deletion.

In Fig. 4, in the case where Mr. B places the mark indicating deletable (the check mark) in "animation 4", for example, it is determined that permission is obtained from all of the users from whom confirmation of deletion is to be obtained, and the recorded program in which deletion is permitted is moved to the deleted-content folder 50.

After the recorded program is moved to the deleted-content folder 50, any one of Messrs. A and B and the other users can delete the program.

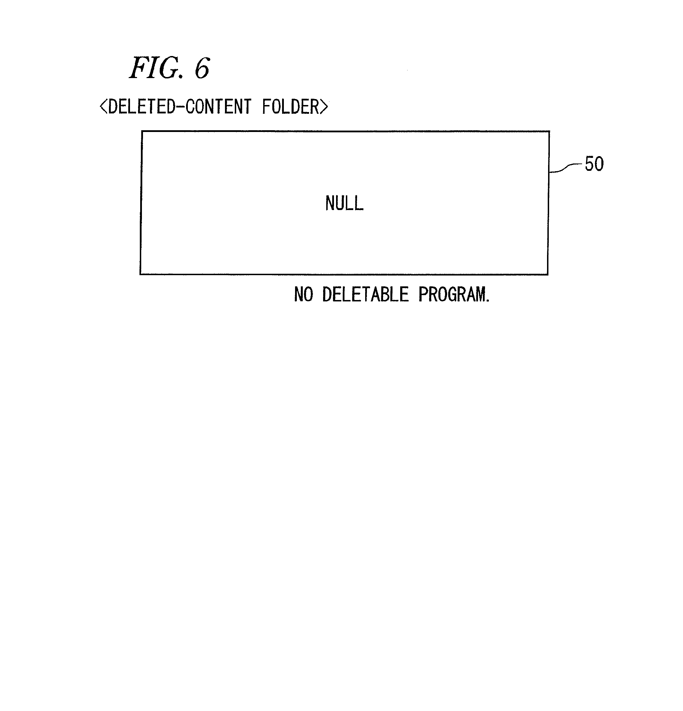

Fig. 6 is a view showing an example of a display screen on which, in the case where there is no deletable program, contents stored in the deleted-content folder are displayed in the video recorder of the embodiment.

In the deleted-content folder 50 of the video recorder 10, when the deleting process is executed, the stored contents are deleted. As a result of execution of the deleting process, no other deletable content exists, and the deleted-content folder 50 is null.

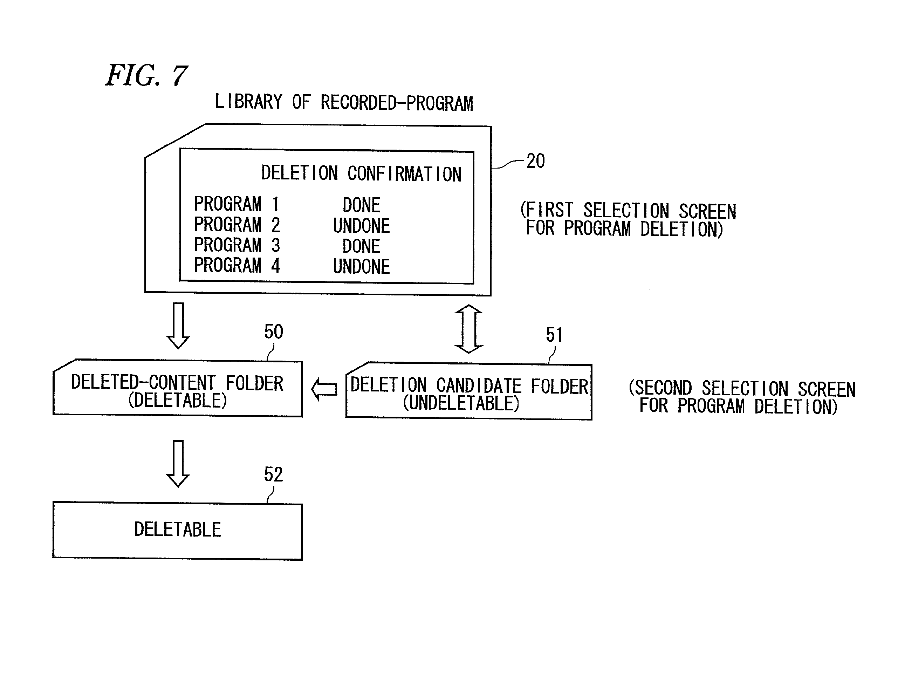

Fig. 7 is a view conceptually showing the flow a process of deleting a recorded program in the video recorder of the embodiment.
As described above, contents (white boxes: undeletable) in which one or more users do not permit deletion are displayed in the recorded-program library (first selection screen for program deletion) 20.

Here, it is assumed that one of the users permits deletion of a content (affixed by a white box) in which deletion is not permitted (the white box → a black box), resulting in that, with respect to the content, all of the users input permission of deletion (all of users are provided with a black box).

In this case, the content is moved to the deleted-content folder 50. Alternatively, before the recorded-program library (first selection screen for program deletion) 20 is displayed, also the content in which all of the users input permission of deletion (all of users are provided with a black box) is moved to the deleted-content folder 50.

In the folder, the deleting process is enabled (52), and the content is subjected to the deleting process.
A content (affixed by a white box) in which one of the users does not permit deletion is moved to the deletion candidate folder (undeletable) 51.
When, in the second program selection screen, permission is obtained from all of the users from whom permission of deletion is to be obtained, and the permission is input (in the example, a check mark is placed), the content is moved to the deleted-content folder 50.

Similarly as described above, the content is moved to the deleted-content folder 50, and subjected to the deleting process.
In the case where permission is not obtained from the users from whom permission of deletion is to be obtained (in the second program selection screen, a check mark is not placed, and deletion disable is input), the content is returned to the state where it is displayed on the first program selection screen, as described later.

In the recorded-program library 20, also a program not having the deletion confirmation attribute (a program in which all of the users are provided with a black box) may be juxtaposedly displayed so that deletion is instructed by the user.

In this case, the program is moved directly to the deleted-content folder 50. Programs in the deleted-content folder 50 can be deleted.
In the case where a program having the deletion confirmation attribute (a program in which at least one of the users is provided with a white box) is to deleted, the program is once moved to the deletion candidate folder 51. In the deletion candidate folder 51, when permission is obtained from all of the users from whom permission of deletion is to be obtained, the program is moved to the deleted-content folder.

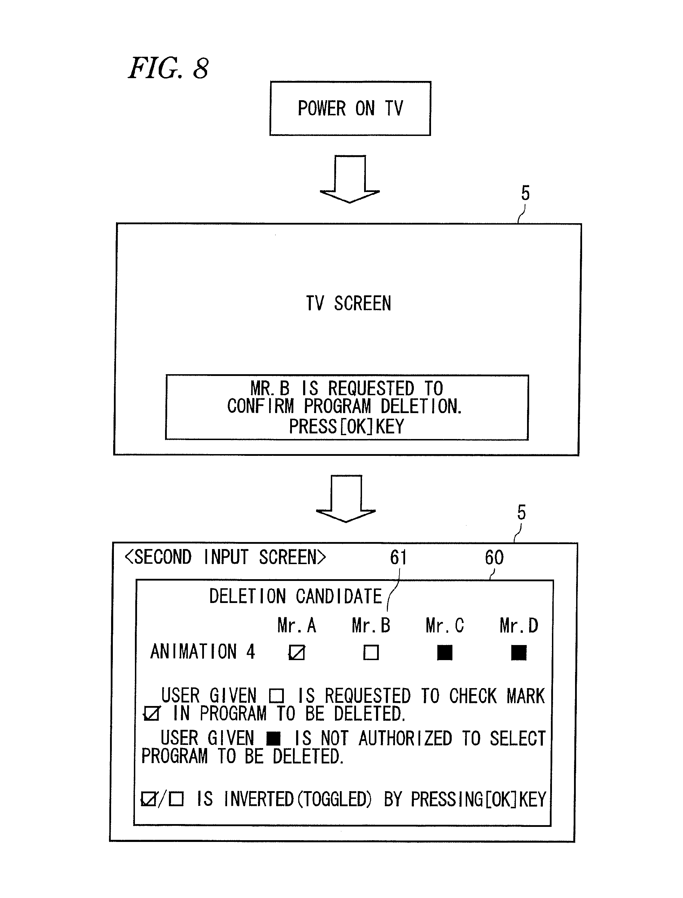

Fig. 8 is a view showing a manner in which users to whom confirmation of program deletion is requested are displayed, and a second input screen is displayed in the video recorder of the embodiment.
The figure shows a state where, as described above, the recorded program or animation 4 in which permission of deletion is to be obtained from Mr. B is selected in the recorded-program library (first selection screen for program deletion) 20. As this time, with respect to the animation 4, Mr. B sets undeletable state (the white box). The content is stored in the deletion candidate folder (undeletable) 51.

In conjunction with power-on of the TV set, for example, the state where a request for confirming deletion of the program (animation 4) is issued to Mr. B is displayed on a display screen 5 of the TV set.
From the display, it is known that a request for confirming deletion of the program is issued to Mr. B.
Mr. B operates the remote controller or the like which is not shown, to select an OK key.
Then, the second input screen 60 is displayed on the display screen 5.
As indicated by 61, Mr. B sets the undeletable state (the white box).
When Mr. B who sets undeletable state (the white box) thinks that the program (animation 4) is deletable, Mr. B inputs permission of deletion (a check mark is placed in the white box). When Mr. B does not think that the program is deletable, Mr. B does not input permission (a check mark is not placed in the white box).

As described above, the program (for example, animation 4) in which deletion is permitted (a check mark is placed) is moved to the deleted-content folder (deletable) 50, and the deleting process is executed. In the embodiment, a toggle system is used as an example of the input.

The figure shows that Messrs. C and D to whom a black box is affixed are not franchises participated in the deletion voting for the recorded program.
An example of the operation of the video recorder 10 will be described.
On the night of August 1st, for example, Mr. A selects the recorded-program library (first selection screen for program deletion) in order to obtain permission of deletion of the program (animation 4). The program (animation 4) is a program in which Mr. B sets to be undeletable (the white box). The program (animation 4) is moved to the deletion candidate folder, and then the power supply of the video recorder is turned off. Mr. A waits for confirmation from Mr. B.

On the daytime of August 2nd, when the power supply of the TV (video recorder) 10 is turned on, a message indicating that confirmation of deletion is requested is displayed in conjunction with the power on, as described above.
It is notified that Mr. B is requested to confirm deletion. When Mr. B thinks that the program (animation 4) is deletable, Mr. B inputs permission of deletion (a check mark is placed in the white box) through the second program selection screen.

The program (animation 4) is moved to the deleted-content folder 50.
On the night of the day, Mr. A deletes the recorded program (animation 4) in the deleted-content folder , and hence the free space of the HDD is increased.
In the above description, Mr. A deletes the recorded program (animation 4). Alternatively, the video recorder 10 may automatically delete the recorded program (animation 4).

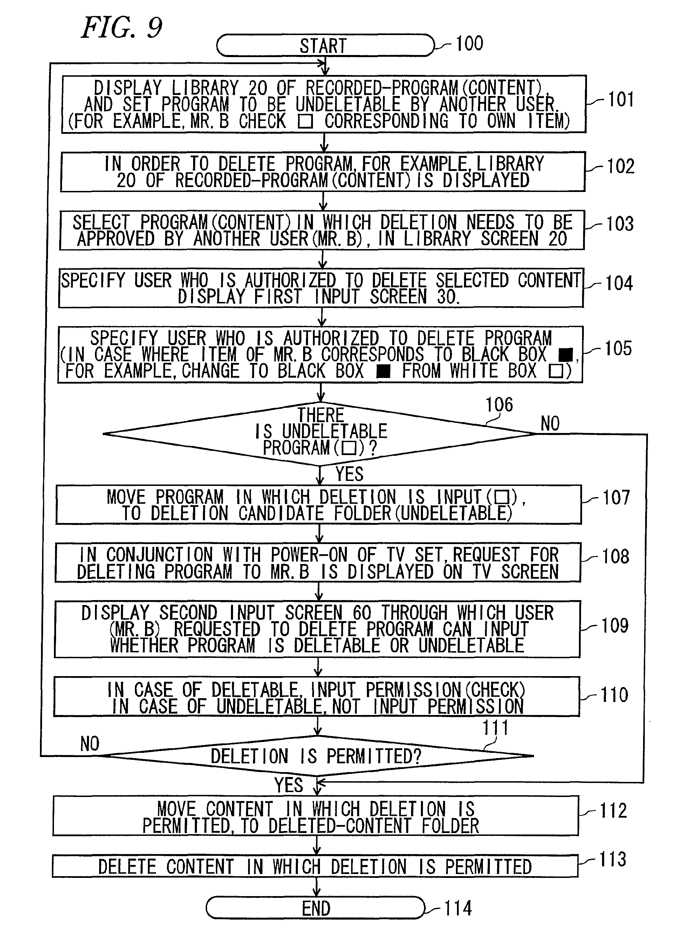

Fig. 9 is a flowchart illustrating the operation of the video recorder of the embodiment.
The reference numeral 100 denotes a start step. Then, the process proceeds to the step denoted by 101.
The reference numeral 101 denotes a step of displaying the recorded-program (content) library 20, and setting a program which is should not be deleted by another user, to be undeletable. In this step, for example, Mr. B affixes a white box to the own column to set the program to be undeletable. Then, the process proceeds to the step denoted by 102.

The reference numeral 102 denotes a step in which, in order to delete a program, for example, Mr. A causes the recorded-program (content) library 20 to be displayed. Programs in which permission of deletion is to be obtained are displayed in the form of a list. Then, the process proceeds to the step denoted by 103.

The reference numeral 103 denotes a step where a program (content) in which permission of deletion is to be obtained from another user (for example, Mr. B) is selected in the library screen 20. Then, the process proceeds to the step denoted by 104.

The reference numeral 104 denotes a step of displaying the first input screen 30 through which a user from whom permission of deletion is to be obtained is designated. Then, the process proceeds to the step denoted by 105.
The reference numeral 105 denotes a step of designating a user from whom permission of deletion is to be obtained. In the case where Mr. B is indicated by a black box, for example, the square is changed to a white box. Then, the process proceeds to the step denoted by 106.

The reference numeral 106 denotes a step of determining whether there is a undeletable program (in this example, a program affixed with a white box) or not. If it is determined that there is a undeletable program, the process proceeds to the step denoted by 107 (Yes). If it is determined that there is not a undeletable program, the process proceeds to the step denoted by 112 (No).

The reference numeral 107 denotes a step where a program in which deletion is input (a white box is affixed) is moved to the deletion candidate folder (undeletable) 51, to be stored therein. Then, the process proceeds to the step denoted by 108.

The reference numeral 108 denotes a step where, in conjunction with power-on of the TV set, for example, a request for permission of deletion of the program and issued to Mr. B is displayed on the TV screen. The display timing is not limited to the time when the TV power supply is turned on, and may be adequately changed. For example, the display may be periodically performed. Then, the process proceeds to the step denoted by 109.

The reference numeral 109 denotes a step of displaying the second input screen 60 through which the user (Mr. B) to whom deletion is requested can input whether the program is deletable or undeletable. Then, the process proceeds to the step denoted by 110.
The reference numeral 110 denotes a step where Mr. B inputs era or undeletable state of the designated recorded program. In the case where the recorded program is deletable, permission (a check) is input. In the case where the recorded program is undeletable, permission is not input. Then, the process proceeds to the step denoted by 111.

The reference numeral 111 denotes a step of determining whether deletion of the designated recorded program is permitted or not. If it is determined that deletion of the designated recorded program is permitted, the process proceeds to the step denoted by 112 (Yes). If it is determined that deletion of the designated recorded program is not permitted, the process proceeds to the step denoted by 101 to repeat the above-described processes (No).

The reference numeral 112 denotes a step of moving the content in which deletion is permitted, to the deleted-content folder. Then, the process proceeds to the step denoted by 113.
The reference numeral 113 denotes a step of deleting the content in which deletion is permitted. Then, the process proceeds to the step denoted by 114.
The reference numeral 114 denotes an end step in which the process is ended. In the embodiment, according to the configuration, when the recorded-program library (first selection screen for program deletion) 20 is displayed, for example, it is easily known who wishes saving, or from whom permission of deletion must be obtained. In the first input screen based on the display, a user from whom permission of deletion is to be obtained is selected and designated, and then input (a white box).

Based on the attribute information (here, a white box) indicating that saving is requested, confirmation of deletion (if the program is deletable, the white box is indicated by a check mark) is input through the second input screen, whereby, in the case where permission is obtained from all of users from which confirmation must be obtained, the recorded program can be deleted. As a result, the program can be prevented from being accidentally deleted.

The attribute information indicating that saving is requested can be updated at any time by each of the users.
Therefore, all of users from which permission of deletion must be obtained are not always required to be in the vicinity of the video recorder 10 at the same time. When permission of deletion are obtained (input) from all of the users at different times, for example, it is possible to delete a predetermined recorded program.

While certain embodiments have been described, these embodiments have been presented by way of example only, and are not intended to limit the scope of the invention. Indeed, the novel methods and systems described herein may be embodied in a variety of other forms. Furthermore, various omissions, substitutions and changes in the form of the methods and systems described herein may be made without departing from the sprit of the invention. The accompanying claims and their equivalents are intended to cover such forms or modifications as would fall within the scope and sprit of the invention.

## Claims

1. A video recorder, comprising:
a first-input screen output module configured to output a first input screen, wherein at least one user authorized to delete a recorded content is specified using the first input screen;
a second-input screen output module to output a second input screen, wherein the user can determine whether to delete the recorded content using the second input screen; and
a content deleting module configured to delete the recorded content when the user determines to delete the recorded content.

2. The recorder according to claim 1, further comprising:
a first list output module configured to output a first list including a list of recorded contents, wherein the recorded content to be deleted is selected from the first list.

3. The recorder according to claim 1, further comprising:
a second list output module configured to output a second list including a list of recorded contents and a list of the specified user, wherein the recorded content to be deleted is selected from the second list.

4. The recorder according to claim 1, further comprising:
a change screen output module configured to change a screen on which the recorded content in a deletable state is displayed to a screen on which the recorded content in an undeletable state is displayed, wherein the recorded content is changed from deletable to undeletable.

5. The recorder according to claim **1**, wherein
when the at least one user includes a plurality of users, the content deleting module deletes the recorded content when all of the users determine to delete the recorded content.

6. The recorder according to claim **1**, wherein a list of the specified user is displayed within a certain time after the recorder is powered on.

7. A video display device comprising:
a video display module configured to display a video;
a first-input screen output module configured to output a first input screen on the video display module, wherein at least one user authorized to delete a recorded content is specified using the first input screen;
a second-input screen output module to output a second input screen on the video display module, wherein the user can determine whether to delete the recorded content using the second input screen; and
a content deleting module configured to delete the recorded content when the user determines to delete the recorded content.

8. A method of deleting a recorded content, the method comprising:
(a) outputting a first input screen, wherein at least one user authorized to delete a recorded content is specified using the first input screen;
(b) outputting a second input screen, wherein the user can determine whether to delete the recorded content using the second input screen; and
(c) deleting the recorded content when the user determines to delete the recorded content.
